(19) Europäisches Patentamt
European Patent Office
Office européen des brevets

(11) EP 2 095 928 A1

(12) EUROPEAN PATENT APPLICATION
published in accordance with Art. 153(4) EPC

(43) Date of publication:
02.09.2009 Bulletin 2009/36

(51) Int Cl.:
*B29C 45/38* (2006.01)     *B29C 45/17* (2006.01)
*G11B 7/24* (2006.01)      *G11B 7/26* (2006.01)
*B29L 17/00* (2006.01)

(21) Application number: 07832569.3

(22) Date of filing: 27.11.2007

(86) International application number:
PCT/JP2007/072844

(87) International publication number:
WO 2008/069048 (12.06.2008 Gazette 2008/24)

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 29.11.2006 JP 2006322256

(71) Applicants:
• Sumitomo Heavy Industries, LTD.
Tokyo 141-6025 (JP)
• Seikoh Giken CO., LTD.
Matsudo-shi, Chiba 270-2214 (JP)

(72) Inventors:
• SUZUKI, Yasuo
Chiba-shi
Chiba 263-0001 (JP)
• OIKE, Makoto
Matsudo-shi
Chiba 270-2214 (JP)
• SHIBUTANI, Yuji
Matsudo-shi
Chiba 270-2214 (JP)

(74) Representative: Wagner, Karl H.
Wagner & Geyer
Gewürzmühlstrasse 5
80538 Munich (DE)

(54) **DISC FORMING DIE, DISC SUBSTRATE AND METHOD FOR FORMING THE DISC SUBSTRATE**

(57)     An object is to enable a drive to stably support a disk and prevent occurrence of a data read error, a data write error, or a like error. A disk-molding mold comprises a first mirror-surface disk; a second mirror-surface disk; a stamper attached to one of the first and second mirror-surface disks; a first punching portion formed on the first mirror-surface disk; a second punching portion which is formed on the second mirror-surface disk and punches a disk substrate prototype when advanced; a stationary-side surrounding member which surrounds the first punching portion; and a movable-side surrounding member which surrounds the second punching portion. A projection portion (65) is formed on at least one of the surrounding members along an inner circumferential edge thereof such that the projection portion projects toward the other surrounding member. Even when a burr is formed on the side of a disk substrate on which an information surface is formed, the burr is formed to extend from the rear end toward the front end of the chamfered portion of the disk substrate.

FIG. 5

**Description**

TECHNICAL FIELD

The present invention relates to a disk-molding mold, a disk substrate, and a method for molding the same.

BACKGROUND ART

Conventionally, in an injection molding machine for molding disk substrates, resin melted within a heating cylinder is charged into a cavity in a disk-molding mold, and is then cooled and hardened in the cavity so as to obtain a disk substrate.

For such a molding process, the above-mentioned injection molding machine includes the disk-molding mold consisting of a stationary-side mold assembly and a movable-side mold assembly; an injection apparatus for charging resin into a cavity; and a mold-clamping apparatus for bringing the movable-side mold assembly into contact with the stationary-side mold assembly and separating the movable-side mold assembly from the stationary-side mold assembly.

When the movable-side mold assembly is advanced and retreated by the mold-clamping apparatus, the disk-molding mold is closed, clamped, and opened. When the mold is clamped, a cavity is formed between a disk plate of the stationary-side mold assembly and a disk plate of the movable-side mold assembly.

The injection apparatus includes a heating cylinder; an injection nozzle attached to a front end of the heating cylinder; and a screw disposed in the heating cylinder so that the screw can rotate and can advance and retreat.

In a metering step, the screw is rotated, whereby resin is melted and accumulated in front of the screw, and the screw is retreated accordingly. During this period, the disk-molding mold is closed and clamped. Subsequently, in an injection step, the screw is advanced, whereby the resin is injected from the injection nozzle and charged into the cavity via a sprue of the disk-molding mold. In a cooling step, the resin in the cavity is cooled, and hole punching is performed, whereby a disk substrate is completed. Subsequently, the disk-molding mold is opened, and the disk substrate is removed therefrom.

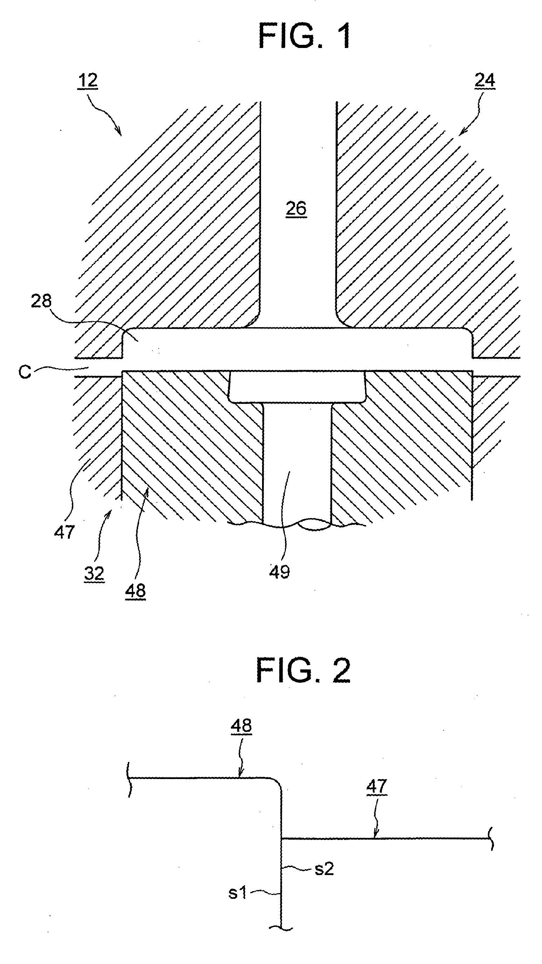

FIG. 1 is a sectional view showing a main portion of a conventional disk-molding mold. FIG. 2 is an enlarged view showing the main portion of the conventional disk-molding mold.

In these drawings, reference numeral 12 denotes a stationary-side mold assembly, and 32 denotes a movable-side mold assembly. The mold assemblies 12 and 32 constitute a disk-molding mold. A sprue bush 24 is provided in the mold assembly 12, and a die 28 is formed at the front end (an end portion facing the mold assembly 32) of the sprue bush 24 so that the die faces a cavity C. A sprue 26 is formed in the sprue bush 24 and communicates with the die 28 so as to introduce resin injected from an injection nozzle of an unillustrated injection apparatus. An unillustrated inner stamper holder is disposed radially outward of the sprue bush 24, and an unillustrated stamper is held by the inner stamper holder.

Further, a cut punch 48, whose front end (an end portion facing the mold assembly 12) has a shape corresponding to the shape of the die 28, is disposed in the mold assembly 32 such that the cut punch 48 advances and retreats. A movable-side bush 47 is disposed radially outward of the cut punch 48, and an ejector pin 49 is disposed radially inward of the cut punch 48 such that the ejector pin 49 advances and retreats.

In an injection step, resin is charged into the cavity C, and in a cooling step, the resin is cooled, whereby a prototype of a disk substrate; i.e., a disk substrate prototype, is formed. At that time, a fine pattern formed on the stamper is transferred to the disk substrate prototype, whereby an information surface is formed on a surface of the disk substrate prototype facing the mold assembly 12. Further, in a cooling step, the cut punch 48 is advanced so as to punch the disk substrate prototype to thereby form an opening at the center of the disk substrate prototype, whereby a disk substrate is formed (see, for example, Patent Document 1).

Subsequently, a reflection film, a cover layer (a light transmission layer), etc. are layered on the disk substrate, whereby a product, such as a disk (e.g., a blue-ray disk), is completed.

Patent Document 1: Japanese Patent Application Laid-Open (*kokai*) No. 2003-154558.

DISCLOSURE OF THE INVENTION

PROBLEMS TO BE SOLVED BY THE INVENTION

However, in the case of the above-described conventional disk-molding mold, a burr may be formed along the circumferential edge of the opening of the disk substrate.

Specifically, if resin enters a clearance between the outer circumferential surface of the cut punch 48 and the inner circumferential surface of the die 28 when the distal end of the cut punch 48 is caused to enter the die 28, a cutting burr; i.e., a burr generated as a result of punching, may be formed along the circumferential edge of the opening of the disk substrate on the side toward the mold assembly 12. In such a case, since the stamper is disposed on the mold assembly 12, the cutting burr is formed on the side of the disk substrate where the information surface is formed; i.e., the information surface side thereof.

A disk, in particular, a blue-ray disk, must be set onto a drive of AV equipment or the like with the information surface facing downward when data (information) are read from the blue-ray disk or are written onto the blue-ray disk.

Therefore, the above-cutting burr is likely to come into contact with the drive, and, in such a case, the drive fails to stably support the blue-ray disk.

Further, a slight clearance is formed between the movable-side bush 47 and the cut punch 48; i.e., between the inner circumferential surface s1 of the movable-side bush 47 and the outer circumferential surface s2 of the cut punch 48 so as to allow advancing and retreating movements of the cut punch 48. If the dimensional accuracies of the movable-side bush 47, the cut punch 48, etc. are low, the cut punch 48 inclines in relation to the movable-side bush 47, and the size of the clearance increases locally. If the resin enters the clearance, a burr may be formed along the circumferential edge of the opening of the disk substrate on the side toward the mold assembly 32; i.e., on the non information surface side thereof.

In such a case, when the blue-ray disk is set or removed, the burr may come into contact with other components or the like and break, so that resin debris may scatter, enter a space between the blue-ray disk and the drive, and abrade the drive. As a result, the drive becomes unable to stably support the blue-ray disk, and, when data are read out from or written onto the disk, a read error, a write error, or a like error occurs.

In order to overcome the above-described drawback, there has been provided a disk-molding mold in which a stamper is disposed on the mold assembly 32 so as to form an information surface on a side of a disk substrate prototype which side faces the mold assembly 32. In this case, even when a cutting burr is formed, the cutting bur projects toward the non information surface side. Therefore, the cutting burr does not come into contact with a drive even when a completed blue-ray disk is set on the drive.

However, if a cutting burr is broken and resin debris scatters when the blue-ray disk is set or removed, the resin debris may abrade the drive as described above. As a result, the drive becomes unable to stably support the blue-ray disk, and, when data are read out from or written onto the disk, a read error, a write error, or a like error occurs.

In addition, if resin enters the clearance between the inner circumferential surface s1 of the movable-side bush 47 and the outer circumferential surface s2 of the cut punch 48, a burr may be formed along the circumferential edge of the opening of the disk substrate on the side toward the mold assembly 32; i.e., on the information surface side thereof. In such a case, the drive becomes unable to stably support the blue-ray disk, and, when data are read out from or written onto the disk, a read error, a write error, or a like error occurs.

An object of the present invention is to solve the above-mentioned problem in the conventional disk-molding mold and to provide a disk-molding mold which enables a drive to stably support a disk and prevents occurrence of a data read error, a data write error, or a like error, as well as a disk substrate and a method for molding the same.

MEANS FOR SOLVING THE PROBLEMS

To achieve the above object, a disk-molding mold of the present invention comprises a first mirror-surface disk; a second mirror-surface disk disposed such that the second mirror-surface disk advances toward the first mirror-surface disk and retreats away from the first mirror-surface disk; a stamper attached to one of the first and second mirror-surface disks; a first punching portion formed on the first mirror-surface disk; a second punching portion formed on the second mirror-surface disk and disposed such that the second punching portion advances toward the first punching portion and retreats away from the first punching portion, the second punching portion punching a disk substrate prototype within a cavity when advanced; a stationary-side surrounding member which surrounds the first punching portion; and a movable-side surrounding member which surrounds the second punching portion.

A projection portion is formed on at least one of the surrounding members along an inner circumferential edge thereof such that the projection portion projects toward the other surrounding member.

EFFECTS OF THE INVENTION

According to the present invention, a disk-molding mold comprises a first mirror-surface disk; a second mirror-surface disk disposed such that the second mirror-surface disk advances toward the first mirror-surface disk and retreats away from the first mirror-surface disk; and a stamper attached to one of the first and second mirror-surface disks; a first punching portion formed on the first mirror-surface disk; a second punching portion formed on the second mirror-surface disk and disposed such that the second punching portion advances toward the first punching portion and retreats away from the first punching portion, the second punching portion punching a disk substrate prototype within a cavity when advanced; a stationary-side surrounding member which surrounds the first punching portion; and a movable-side surrounding member which surrounds the second punching portion.

A projection portion is formed on at least one of the surrounding members along an inner circumferential edge thereof such that the projection portion projects toward the other surrounding member.

In this case, since a projection portion is formed on at least one of the stationary-side and movable-side surrounding members along an inner circumferential edge thereof such that the projection portion projects toward the other surrounding member, a distal end of a burr is prevented from projecting from an information surface or a non information surface. Accordingly, when a disk is set on a drive of AV equipment or the like, contact of a burr with the drive can be prevented.

Further, the burr does not come into contact with other components, and no resin debris scatters. Accordingly, the drive is not abraded.
As a result, it becomes possible to enable a drive to stably support a disk and prevent occurrence of a data read error, a data write error, or a like error, which would otherwise occur when data are read from the disk or written onto the disk.

BRIEF DESCRIPTION OF THE DRAWINGS

[FIG. 1] Sectional view showing a main portion of a conventional disk-molding mold.
[FIG. 2] Enlarged view showing the main portion of the conventional disk-molding mold.
[FIG. 3] Sectional view of a disk-molding mold according to a first embodiment of the present invention.
[FIG. 4] Control block diagram of an injection molding machine according to the first embodiment of the present invention.
[FIG. 5] Enlarged view showing a main portion of the disk-molding mold according to the first embodiment of the present invention.
[FIG. 6] Sectional view of a disk-molding mold according to a second embodiment of the present invention.
[FIG. 7] Enlarged view showing a main portion of the disk-molding mold according to the second embodiment of the present invention.
[FIG. 8] Sectional view showing a main portion of a stationary-side mold assembly according to a third embodiment of the present invention.
[FIG. 9] Sectional view showing a main portion of a disk-molding mold according to the third embodiment of the present invention.
[FIG. 10] Sectional view showing a main portion of a disk-molding mold according to a fourth embodiment of the present invention.
[FIG. 11] Sectional view of a disk-molding mold according to a fifth embodiment of the present invention.

DESCRIPTION OF SYMBOLS

12, 32: mold assembly
14: inner stamper holder
24: sprue bush
16, 36: disk plate
47: movable-side bush
48: cut punch
62: floating punch
65, 85, 95, 96: projection portion
124a: main portion

124b: circumferential edge portion
C: cavity

BEST MODE FOR CARRYING OUT THE INVENTION

Embodiments of the present invention will next be described in detail with reference to the drawings. Herein, a disk-molding mold for molding a disk substrate as a molded product will be described.

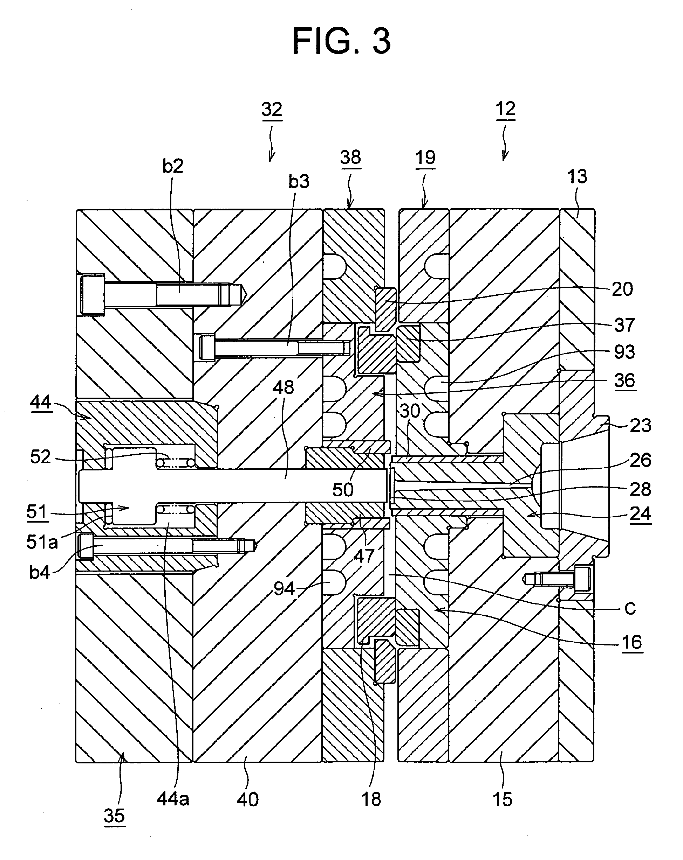

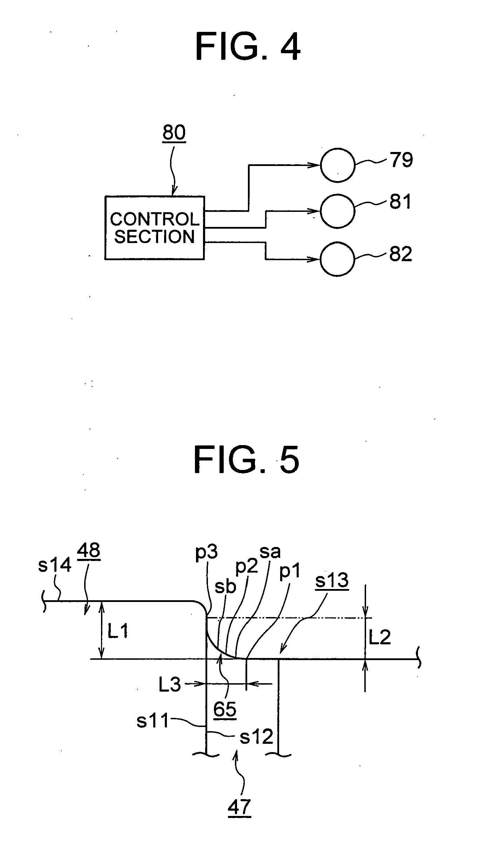

FIG. 3 is a sectional view of a disk-molding mold according to a first embodiment of the present invention. FIG. 4 is a control block diagram of an injection molding machine according to the first embodiment of the present invention. FIG. 5 is an enlarged view showing a main portion of the disk-molding mold according to the first embodiment of the present invention.
In these drawings, reference numeral 12 denotes a stationary-side mold assembly (a first mold) attached to an unillustrated stationary platen via an attachment plate 13 by use of unillustrated bolts. The mold assembly 12 includes a base plate (a first support plate) 15; a disk plate (a first mirror-surface disk) 16 attached to the base plate 15 by use of unillustrated bolts; a locating ring 23 disposed in the attachment plate 13 in such a manner as to face the stationary platen and adapted to position the mold assembly 12 in relation to the stationary platen; and a sprue bush 24 disposed such that it is located adjacent to the locating ring 23 (with its rear end being abutted against the locating ring 23). A die (a recess portion for punching) 28 is formed at the front end of the sprue bush 24 so that the die faces a cavity C formed when the mold is clamped. A sprue 26 is formed in the sprue bush 24 and communicates with the die 28. Resin (a molding material) injected from an injection nozzle of an unillustrated injection apparatus passes through the sprue 26. Notably, the injection apparatus includes an unillustrated heating cylinder (a cylinder member); an injection nozzle attached to the front end of the heating cylinder; and a screw (an injection member) disposed in the heating cylinder so that the screw can rotate and can advance and retreat. Notably, the mold assembly 12 includes a stationary-side bush (a center bush) 30, which is disposed radially outward of the sprue bush 24 to surround the sprue bush 24 and which serves as a surrounding portion and a tubular member.
An annular butt ring 37 is attached to an outer circumferential edge of the disk plate 16, and an annular first guide ring 19 is disposed radially outward of the disk plate 16 and the butt ring 37 and attached to the base plate 15.
Meanwhile, reference numeral 32 denotes a movable-side mold assembly (a second mold) attached to an unillustrated movable platen by use of unillustrated bolts. The mold assembly 32 includes a base plate (a receiving member) 35; an intermediate plate (a second support plate) 40 attached to the base plate 35 by use of bolts b2; a disk plate (a second mirror-surface disk) 36 attached to the intermediate plate 40 by use of bolts b3; a cylinder 44 which is disposed within the base plate 35 such that its rear end faces the movable platen and which is attached to the intermediate plate 40 by use of bolts b4; and a cut punch 48 which is advanced and retreated along the cylinder 44 and whose front end has a shape corresponding to that of the die 28. Notably, the sprue bush 24 constitutes a first punching portion, and the cut punch 48 constitutes a second punching portion.

An annular cavity ring 18 is disposed in opposition to the butt ring 37 such that the cavity ring 18 moves axially in relation to the disk plate 36. An annular second guide ring 38 is disposed radially outward of the disk plate 36 and the cavity ring 18 and is attached to the intermediate plate 40. The cavity ring 18 is disposed on the intermediate plate 40 via unillustrated rods such that it moves in relation to the intermediate plate 40. Reference numeral 20 denotes a cavity ring retainer attached to the second guide ring 38 by use of unillustrated bolts. The cavity ring retainer 20 is engaged with an outer circumferential edge of the cavity ring 18. The cavity ring 18 projects from the front end surface of the disk plate 36. The inner circumferential surface of the cavity ring 18 forms the outer circumferential edge of a disk substrate.

A flange 51 formed integrally with the cut punch 48 is disposed within a cylinder chamber 44a of the cylinder 44 such that it is advanced and retreated. A rear end 51a of the flange 51 is received by the cylinder 44. Further, a cut-punch return spring (an urging member) 52 is disposed ahead of the flange 51. The cut-punch return spring 52 urges the cut punch 48 (and the flange 51) rearward. A movable-side bush 47, which serves as a surrounding portion and a tubular member, is disposed radially outward of a front half portion of the cut punch 48, the front half portion being located on the side toward the mold assembly 12, such that the movable-side bush 47 is located adjacent to the cut punch 48 and is slidable in relation thereto. The movable-side bush 47 supports the cut punch 48. The movable-side bush 47 is disposed in the mold assembly 32 in an immobilized manner and is fixed to the disk plate 36 and the intermediate plate 40. Notably, unillustrated air blow holes are formed between the cut punch 48 and the movable-side bush 47 so as to jet air for releasing a molded disk substrate from the mold.

Moreover, an unillustrated ejector pin is disposed radially inward of the cut punch 48 such that the ejector pin advances and retreats. An ejection motor (a drive section for ejection) 82 is disposed and connected to the ejector pin so as to enable the ejector pin to eject the disk substrate. Through drive of the ejection motor 82, the ejector pin can be advanced so as to eject the disk substrate.

An unillustrated stamper is removably attached to the disk plate 36. A fine pattern formed on the stamper is transferred onto a disk substrate prototype formed of resin charged into the cavity C, whereby an information surface including projections and depressions (grooves, pits, etc.) is formed on the disk substrate prototype. A tubular inner stamper holder (an inside holding member) 50 for holding an inner circumferential edge of the stamper is disposed radially outward of the movable-side bush 47.

First and second temperature control flow passages 93 and 94 are formed in the disk plates 16 and 36, respectively. A temperature control medium, such as water, oil, or air, is supplied to the first and second temperature control flow passages 93 and 94, whereby the disk plates 16 and 36 are cooled. Notably, similarly, temperature control flow passages are formed in the first guide ring 19 and the second guide ring 38.

Notably, the mold assemblies 12 and 32 constitute a disk-molding mold; and an unillustrated mold-clamping apparatus is disposed in order to bring the mold assembly 32 into contact with the mold assembly 12 and separate the mold assembly 32 away from the mold assembly 12. The mold-clamping apparatus includes the above-described stationary platen, the above-described movable platen, and a mold clamping motor (a drive section for mold clamping) 79. Through drive of the mold clamping motor 79, the mold assembly 32 is advanced and retreated via the movable platen, whereby the disk-molding mold is closed, clamped, and opened. As described above, when the disk-molding mold is clamped, the above-described cavity C is formed between the disk plates 16 and 36.

Further, a punching motor (a drive section for punching) 81 is disposed and connected to the cut punch 48 so as to enable the cut punch 48 to punch the disk substrate prototype. When the cut punch 48 is caused to advance through drive of the punching motor 81 such that its front end portion enter the die 28, an opening is formed in the disk substrate prototype within the cavity C, whereby a disk substrate is formed.

Next, operation of the disk-molding mold having the above-described structure will be described.

In a metering step, the screw is rotated, whereby resin is melted and accumulated in front of the screw, and, as a result, the screw is retreated. During this period, unillustrated mold open-close processing means (a mold open-close processing section) of a control section 80 performs mold open-close processing so as to drive the mold clamping motor 79, to thereby advance the mold assembly 32 via the movable platen. Thus, the disk-molding mold is closed and clamped.

Subsequently, in an injection step, the screw is advanced, whereby the resin accumulated in front of the screw is injected from the injection nozzle and charged into the cavity C.

In a cooling step, the resin in the cavity C is cooled, whereby a disk substrate prototype is formed. During that time, unillustrated punching processing means (a punching processing section) of the control section 80 performs punching processing so as to drive the punching motor 81 so as to cause the cut punch 48 to advance and enter a front end into the die 28. As a result, the cut punch 48 is placed in an advancement limit position, which is the position of furthest advance within a movable rang, so as to punch the disk substrate prototype within the cavity C, to thereby form an opening therein.

Subsequently, the mold open-close processing means drives the mold clamping motor 79 so as to retreat the mold assembly 32 via the movable platen, to thereby open the mold. At that time, unillustrated ejection processing means (an ejection processing section) of the control section 80 performs ejection processing so as to drive the ejection motor 82 so as to cause the ejector pin to advance and eject the disk substrate. At that time, the disk substrate is taken out by an unillustrated take-out machine.

Subsequently, the punching processing means drives the punching motor 81 so as to retreat the cut punch 48 and place it in a retreat limit position, which is the position of furthest retreat within the movable range. At the same time, the ejection processing means drives the ejection motor 82 so as to retreat the ejector pin and place it in the retreat limit position thereof.

Subsequently, a reflection film, a cover layer (a light transmission layer), etc. are layered on the disk substrate, whereby a product, such as a disk (e.g., a blue-ray disk), is completed.

Incidentally, a slight clearance is formed between the movable-side bush 47 and the cut punch 48; i.e., between the inner circumferential surface s11 of the movable-side bush 47 and the outer circumferential surface s12 of the cut punch 48 so as to allow advancing and retreating movements of the cut punch 48. If the dimensional accuracies of the movable-side bush 47, the cut punch 48, etc. are low, the cut punch 48 inclines in relation to the movable-side bush 47, and the size of the clearance increases locally. If the resin enters the clearance, a burr may be formed along the circumferential edge of the opening of the disk substrate on the side toward the mold assembly 32; i.e., on the information surface side of the disk substrate.

In this case, since the stamper is disposed on the mold assembly 32, the information surface is formed on the surface of the disk substrate facing the mold assembly 32. Therefore, the burr is formed on the information surface side. If the burr comes into contact with a drive of AV equipment or the like when the disk is set onto the drive, the drive cannot support the disk stably. As a result, when data are read out from or written onto the disk, a read error, a write error, or a like error occurs.

In view of the above-described problem, in the present embodiment, a front end surface (a surface facing the mold assembly 12) s13 of the movable-side bush 47 projects toward the mold assembly 12 at the inner circumferential edge thereof, to thereby form a projection portion 65, as shown in FIG. 5. The projection amount of the projection portion 65 increases toward the inner circumferential edge, and the front end surface s13 includes a round portion sa which extends from a point p1 to a point p2 and which is curved to have an arcuate shape, and a straight portion sb which extends straight from the point p2 to a point p3 in contact with the cut punch 48.

As measured when the cut punch 48 is placed in the above-described retreat limit position, an axial distance between a front end surface (a surface facing the mold assembly 12) s14 of the cut punch 48 and the front end surface s13; i.e., a projection amount L1 of the cut punch 48 in relation to the movable-side bush 47, is determined to satisfy the following relation.

$$0.1 \text{ mm} \leq L1 \leq 0.2 \text{ mm}$$

An axial distance between the points p1 and p3; i.e., a projection amount L2 of the projection portion 65, is determined to satisfy the following relation.

$$0.01 \text{ mm} \leq L2 \leq 0.1 \text{ mm}$$

A radial distance between the points p1 and p3; i.e., a projection width L3 of the projection portion 65, is determined to satisfy the following relation.

$$L2 = L3$$

Further, a radius of curvature r1 of the round portion sa is determined to satisfy the following relation.

$$0.05 \text{ mm} \leq r1 \leq 0.15 \text{ mm}$$

An angle of the straight portion sb in relation to the axial direction is set to 45°.

In this case, the retreat limit position of the cut punch 48 is an ejection stand-by position, which represents a stand-by position during the molding process, and a machine limit position, which represents a mechanical limit position, is set at a position rearward of the ejection stand-by position.

In the present embodiment, the projection portion 65 forms an angle of 45° at the point p3. However, the projection portion 65 may be chamfered at the point p3 such that a flat distal end portion extends perpendicular to the axis of the movable-side bush 47, so as to prevent breakage of the projection portion 65, which breakage would otherwise occur, for example, upon receipt of a pressure of resin. Further, in the present embodiment, the above-mentioned front end surface s13 includes the round portion sa and the straight portion sb. However, the front end surface s13 may have an arbitrary shape; for example, may have a round portion only.

As described above, in the present embodiment, the projection portion 65 is formed along the inner circumferential edge of the front end surface s13 of the movable-side bush 47. Therefore, a chamfered portion which has a shape corresponding to the shape of the projection portion 65 is formed on the information surface side of the disk substrate along the inner circumferential edge thereof.

Thus, even when a clearance is formed between the inner circumferential surface s11 of the movable-side bush 47 and the outer circumferential surface s12 of the cut punch 48, and a burr is formed on the information surface side of the disk substrate, the burr extends from the rear end (an end portion on the non information surface side) of the chamfered portion of the disk substrate toward the front end (an end portion on the information surface side) thereof. Therefore, a distal end of the burr is prevented from projecting beyond the information surface (downward in FIG. 4).

Therefore, in the case of a disk, such as a blue-ray disk, which must be set onto a drive of AV equipment or the like with the information surface facing downward when data are read from the disk or are written onto the disk, the burr is prevented from coming into contact with the drive. As a result, the drive can stably support the disk, whereby occurrence of a read error, a write error, or a like error can be prevented.

Further, the front end surface s14 of the cut punch 48 is always placed forward of the front end surface s13 of the movable-side bush 47 during the molding process, and its projection amount becomes the predetermined projection amount L1 when the cut punch 48 is placed in the retreat limit position. Therefore, even when a pressure of resin or a like pressure is applied to the projection portion 65, the projection portion 65 does not break, because the projection portion 65 is supported by the cut punch 48.

Next, a second embodiment of the present invention will be described. Components having the same structures as those of the first embodiment are denoted by the same reference numerals. For the effects that the second embodiment yields through employment of the same structure as the first embodiment, the effects that the first embodiment yields are cited.

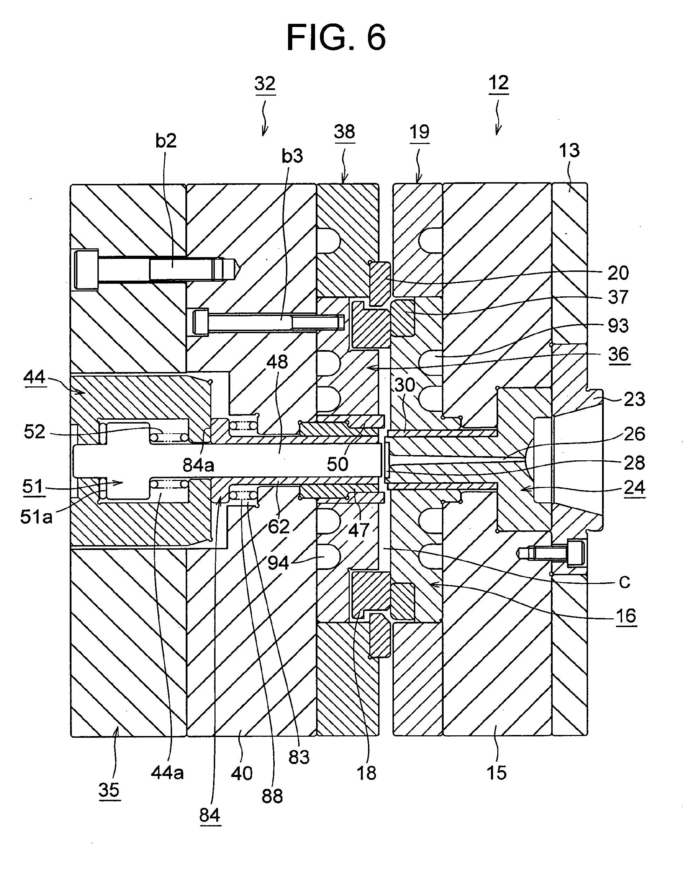

FIG. 6 is a sectional view of a disk-molding mold according to the second embodiment of the present invention.

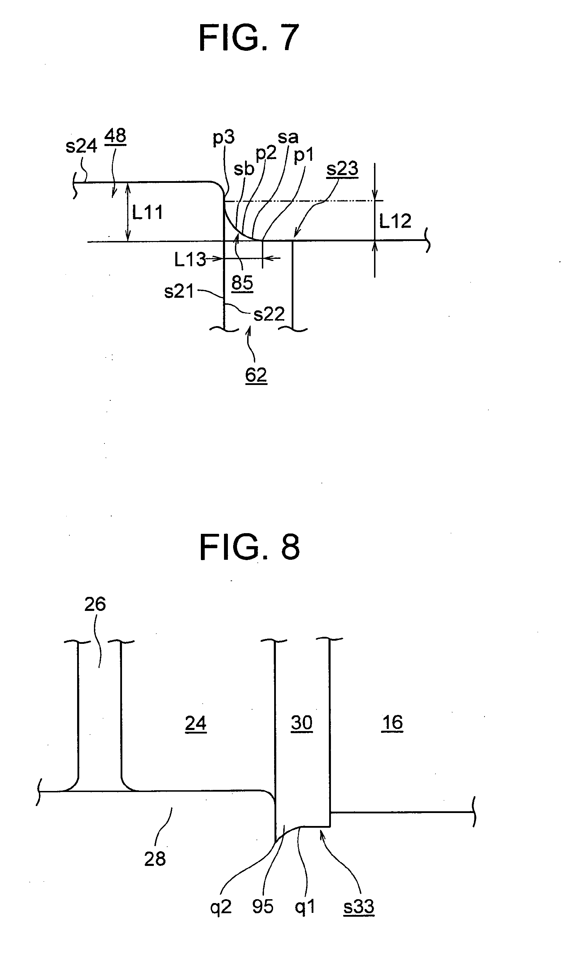

FIG. 7 is an enlarged view showing a main portion of the disk-molding mold according to the second embodiment of the present invention.

In this case, as in the first embodiment, an unillustrated stamper is attached to the disk plate 36.

In the present embodiment, a floating punch 62, which serves as a movable-side surrounding member and a tubular member, is disposed radially outward of the cut punch 48 and radially inward of the inner stamper holder 50 such that the floating punch 62 surrounds the cut punch 48, is located adjacent to the cut punch 48, and is slidable in relation thereto. The floating punch 62 is advanced and retreated so as to eject a molded disk substrate. Therefore, a cylinder chamber 83 is formed in a rear end portion of the intermediate plate (a second support plate) 40 such that the cylinder chamber 83 faces the cylinder 44. A flange 84 formed integrally with the floating punch 62 is disposed within the cylinder chamber 83 such that the flange 84 advances and retreats, and a rear end 84a of the flange 84 is supported by the cylinder 44. Further, a floating-punch return spring (an urging member) 88 is disposed on the front side of the flange 84. The floating-punch return spring 88 urges the floating punch 62 (and the flange 84) rearward. Moreover, the movable-side bush 47, which serves as a tubular member, is disposed radially outward of a front half portion of the floating punch 62, the front half portion being located on the side toward the mold assembly (a first mold) 12. The floating punch 62 is held by the movable-side bush 47.

The mold clamping motor (a drive section for mol clamping) 79 (FIG. 4) is disposed so as to close, clamp, and open the disk-molding mold by an unillustrated mold-clamping apparatus. The punching motor (a drive section for punching) 81 (FIG. 4) is disposed and connected to the cut punch 48 so as to perform punching by the cut punch 48. The ejection motor (a drive section for ejection) 82 (FIG. 4) is disposed and connected to the floating punch 62 so as to eject the disk substrate by the floating punch 62. Notably, the sprue bush 24 constitutes a first punching portion, and the cut punch 48 constitutes a second punching portion.

Incidentally, a slight clearance is formed between the floating punch 62 and the cut punch 48; i.e., between the inner circumferential surface s21 of the floating punch 62 and the outer circumferential surface s22 of the cut punch 48 so as to allow advancing movement of the cut punch 48. If the dimensional accuracies of the floating punch 62, the cut punch 48, etc. are low, the cut punch 48 inclines in relation to the floating punch 62, and the size of the clearance increases locally. If the resin enters the clearance, a burr may be formed along the inner circumferential edge of the opening of the disk substrate on the side of the disk substrate where an information surface is formed.

In view of the above-described problem, in the present embodiment, a front end surface (a surface facing the mold assembly 12) s23 of the floating punch 62 projects toward the mold assembly 12 at the inner circumferential edge thereof, to thereby form a projection portion 85. The front end surface s23 includes a round portion sa which extends from a point p1 to a point p2 and which is curved to generally have an arcuate shape, and a straight portion sb which extends straight from the point p2 to a point p3 in contact with the cut punch 48.

As measured when the cut punch 48 and the floating punch 62 are placed in their retreat limit positions, an axial distance between a front end surface (a surface facing the mold assembly 12) s24 of the cut punch 48 and the front end surface s23; i.e., a projection amount L11 of the cut punch 48 in relation to the floating punch 62, is determined to satisfy the following relation.

$$0.1 \text{ mm} \leq L11 \leq 0.2 \text{ mm}$$

An axial distance between the points p1 and p3; i.e., a projection amount L12 of the projection portion 85, is determined to satisfy the following relation.

$$0.01 \text{ mm} \leq L12 \leq 0.1 \text{ mm}$$

A radial distance between the points p1 and p3; i.e., a projection width L13 of the projection portion 85, is determined to satisfy the following relation.

$$L12 = L13$$

Further, a radius of curvature r1 of the round portion sa is determined to satisfy the following relation.

$$0.05 \text{ mm} \leq r1 \leq 0.15 \text{ mm}$$

An angle of the straight portion sb in relation to the axial direction is set to 45°.

In the present embodiment, the above-mentioned front end surface s23 includes the round portion sa and the straight portion sb. However, the front end surface s23 may have an arbitrary shape; for example, may have a round portion only. Further, in the present embodiment, the projection portion 85 forms an angle of 45° at the point p3. However, the projection portion 85 may be chamfered at the point p3 such that a flat distal end portion extends perpendicular to the axis of the floating punch 62, so as to prevent breakage of the projection portion 85, which breakage would otherwise occur, for example, upon receipt of a pressure of resin. The front end portion can have a shape corresponding to the shape of a cutting edge of a tool for machining the disk-molding mold.

Moreover, when the cut punch 48 and the floating punch 62 are placed at the respective retreat limit positions, the front end surface s24 of the cut punch 48 is placed forward of the above-described front end surface s23.

As described above, in the present embodiment, the projection portion 85 is formed along the inner circumferential edge of the front end surface s23 of the floating punch 62. Thus, even when a clearance is formed between the inner circumferential surface s21 of the floating punch 62 and the outer circumferential surface s22 of the cut punch 48, and a burr is formed on the information surface side of the disk substrate, a distal end of the burr is prevented from projecting beyond the information surface.

Therefore, in the case of a disk, such as a blue-ray disk, which must be set onto a drive of AV equipment or the like with the information surface facing downward when data are read from the disk or are written onto the disk, the burr is prevented from coming into contact with the drive. As a result, the drive can stably support the disk, whereby occurrence of a read error, a write error, or a like error can be prevented when data are read out from the disk or written onto the disk.

Further, the floating punch 62 is advanced and retreated with the cut punch 48 placed in the above-described advancement limit position, and the front end surface s24 of the cut punch 48 is always placed forward of the above-described front end surface s23 during the molding process.
Therefore, even when a pressure of resin or a like pressure is applied to the projection portion 85, the projection portion 85 does not break, because the projection portion 85 is supported by the cut punch 48.

Incidentally, when the distal end of the cut punch 48 enters the die 28 during the above-described punching, in some cases, resin may enter the clearance between the outer circumferential surface of the cut punch 48 and the inner circumferential surface of the die 28, and a cutting burr may be formed along the inner circumferential edge of the opening of the disk substrate on the side toward the mold assembly 12.

In such a case, since the stamper is disposed on the mold assembly 32, the information surface is formed on the side of the disk substrate facing the mold assembly 32. Therefore, in the case of a disk which must be set onto a drive with the information surface facing downward, the cutting burr does not come into contact with the drive.

However, when the disk is set onto a drive of AV equipment or the like or removed therefrom, the cutting burr may come into contact with other components and break, so that resin debris may scatter. In such a case, the burr may abrade the drive. As a result, the drive becomes unable to stably support the disk, and, when data are read out from or written onto the disk, a read error, a write error, or a like error occurs.

Next, there will be described a third embodiment of the present invention which prevents a cutting burr from coming into contact with other components. Components having the same structures as those of the first and second embodiments are denoted by the same reference numerals. For the effects that the third embodiment yields through employment of the same structure as the first and second embodiments, the effects that the first and second embodiments yield are cited.

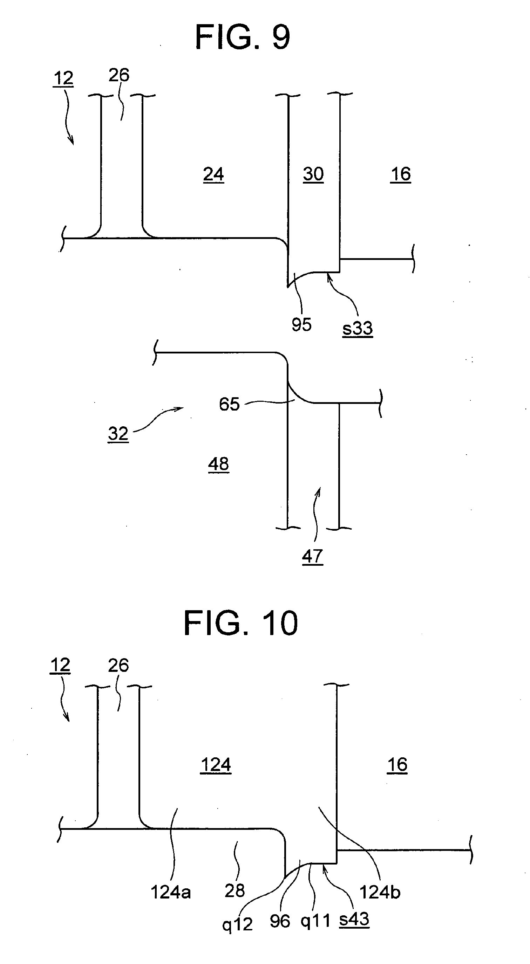

FIG. 8 is a sectional view showing a main portion of a stationary-side mold assembly according to the third embodiment of the present invention. FIG. 9 is a sectional view showing a main portion of a disk-molding mold according to the third embodiment of the present invention.

In the present embodiment, as in the first and second embodiments, an unillustrated stamper is attached to the disk plate 36.

In these drawings, reference numeral 12 denotes the stationary-side mold assembly; 24 denotes the sprue bush; 30 denotes the stationary-side bush; 16 denotes the disk plate; and 26 denotes the sprue. The stationary-side bush 30 is disposed to surround the sprue bush 24, whereby the die 28 is formed. Notably, the stationary-side bush 30 constitutes a surrounding portion; the sprue bush 24 constitutes a first punching portion; and the cut punch 48 disposed on the movable-side mold assembly 32 constitutes the second punching portion.

In this case, a front end surface (a surface facing the mold assembly 32) s33 of the stationary-side bush 30 projects toward the mold assembly 32 at the inner circumferential edge thereof, to thereby form a projection portion 95. The projection amount of the projection portion 95 increases toward the inner circumferential edge. Therefore, the front end surface s33 includes a round portion which extends from a point q1 to a point q2 and which is curved to generally have an arcuate shape.

An axial distance between points q1 and q2; i.e., a projection amount L21 of the projection portion 95, is determined to satisfy the following relation.

0.01 mm ≤ L21 ≤ 0.1 mm

A radial distance between the points q1 and q2; i.e., a projection width L22 of the projection portion 95, is determined to satisfy the following relation.

$$L21 = L22$$

As described above, in the present embodiment, the projection portion 95 is formed along the inner circumferential edge of the front end surface s33 of the stationary-side bush 30. Therefore, a chamfered portion which has a shape corresponding to the shape of the projection portion 95 is formed on the non information surface side of the disk substrate along the inner circumferential edge thereof.

Thus, even when a cutting burr is formed on the information surface side of the disk substrate, the cutting burr extends from the front end (an end portion on the information surface side) of the chamfered portion of the disk substrate toward the rear end (an end portion on the non information surface side) thereof. Therefore, a distal end of the burr is prevented from projecting beyond the non information surface.

Therefore, even when the disk is set onto or removed from AV equipment or the like, the cutting burr does not come into contact with other components, which would otherwise result in breakage of the burr and scattering of resin debris. As a result, since the drive is not abraded, the drive can stably support the disk, to thereby prevent occurrence of a read error, a write error, or a like error at the time when data are read out from or written onto the disk.

Notably, as shown in FIG. 9, in addition to formation of the projection portion 95 on the stationary-side bush 30 of the stationary-side mold assembly 12, the projection portion 65 may be formed on the movable-side bush 47 of the movable-side mold assembly 32 as in the first embodiment. Further, in addition to formation of the projection portion 95 on the stationary-side bush 30 of the stationary-side mold assembly 12, the projection portion 85 may be formed on the floating punch 62 of the movable-side mold assembly 32 as in the second embodiment.

In these cases, even when a burr is formed on the information surface side of a disk substrate, a distal end of the burr is prevented from projecting from the information surface, and even when a cutting burr is formed on the non information surface side of a disk substrate, a distal end of the cutting burr is prevented from projecting from the non information surface.

Next, there will be described a fourth embodiment of the present invention in which the sprue bush 24 and the stationary-side bush 30 are integrated. Components having the same structures as those of the third embodiment are denoted by the same reference numerals. For the effects that the fourth embodiment yields through employment of the same structure as the third embodiment, the effects that the third embodiment yields are cited.

FIG. 10 is a sectional view showing a main portion of a disk-molding mold according to the fourth embodiment of the present invention.

In the present embodiment, as in the first through third embodiments, an unillustrated stamper is attached to the disk plate 36.

In these drawings, reference numeral 124 denotes a sprue bush. The sprue bush 124 is formed to have a main body portion 124a located adjacent to the sprue 26, and a circumferential edge portion 124b located radially outward of the main body portion 124a. The circumferential edge portion 124b constitutes a surrounding portion; the main body portion 124a constitutes a first punching portion; and the cut punch 48 disposed on the movable-side mold assembly 32 constitutes a second punching portion. Further, the circumferential edge portion 124b constitutes a stationary-side surrounding member.

In this case, a front end surface (a surface facing the mold assembly 32) s43 of the circumferential edge portion 124b projects toward the mold assembly 32 at the inner circumferential edge thereof, to thereby form a projection portion 96. The projection amount of the projection portion 96 increases toward the inner circumferential edge. Therefore, the front end surface s43 includes a round portion which extends from a point q11 to a point q12 and which is curved to generally have an arcuate shape.

Notably, in addition to formation of the projection portion 96 on the circumferential edge portion 124b in the stationary-side mold assembly 12, the projection portion 65 may be formed on the movable-side bush 47 in the movable-side mold assembly 32 as in the first embodiment. Further, in addition to formation of the projection portion 96 on the circumferential edge portion 124b in the stationary-side mold assembly 12, the projection portion 85 may be formed on the floating punch 62 in the movable-side mold assembly 32 as in the second embodiment.

In these cases, even when a burr is formed on the information surface side of a disk substrate, a distal end of the burr is prevented from projecting from the information surface, and even when a cutting burr is formed on the non information surface side of a disk substrate, a distal end of the cutting burr is prevented from projecting from the non information surface.

In the first through fourth embodiments, a stamper is disposed on the movable-side mold assembly 32. However, the stamper may be disposed on the stationary-side mold assembly 12. Next, there will be described a fifth embodiment of the present invention in which a stamper is disposed on the stationary-side mold assembly 12. Components having the same structures as those of the first embodiment are denoted by the same reference numerals. For the effects that the fifth embodiment yields through employment of the same structure as the first embodiment, the effects that the first embodiment yields are cited.

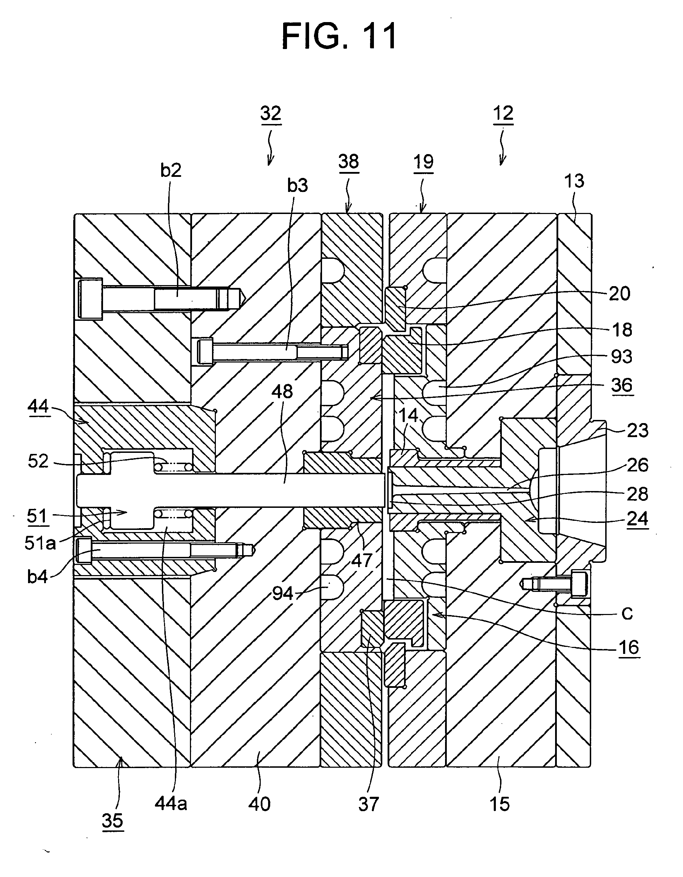

FIG. 11 is a sectional view of a disk-molding mold according to the fifth embodiment of the present invention.

In the present embodiment, an inner stamper holder 14, which serves a stationary-side surrounding member and a tubular member, is disposed in the stationary-side mold assembly (a first mold) 12 such that the inner stamper holder 14 is located radially outward of the sprue bush 24 and surrounds the sprue bush 24. An unillustrated stamper is held by the inner stamper holder 14.

Further, the annular cavity ring 18 is disposed at an outer circumferential edge portion of the disk plate 16 such that the cavity ring 18 moves axially in relation to the disk plate 16. The annular first guide ring 19 is disposed radially outward of the disk plate 16 and the cavity ring 18 and attached to the base plate 15. Reference numeral 20 denotes the cavity ring retainer attached to the first guide ring 19 by use of unillustrated bolts. The cavity ring retainer 20 is engaged with an outer circumferential edge of the cavity ring 18.

Meanwhile, in the movable-side mold assembly (a second mold) 32, the annular butt ring 37 is attached to an outer circumferential edge of the disk plate 36, and the annular second guide ring 38 is disposed radially outward of the disk plate 36 and the butt ring 37 and attached to the intermediate plate 40.

Further, the movable-side bush 47, which serves as a movable-side surrounding member and a tubular member, is disposed radially outward of the cut punch 48 so as to surround the cut punch 48.

In this case, as in the fourth embodiment (FIG. 10), the sprue bush 24 is formed to have a main body portion located adjacent to the sprue 26, and a circumferential edge portion located radially outward of the main body portion. The circumferential edge portion constitutes a surrounding portion; the main body portion constitutes a first punching portion; and the cut punch 48 disposed on the movable-side mold assembly 32 constitutes a second punching portion. Further, the circumferential edge portion constitutes a stationary-side surrounding member.

In this case, a front end surface (a surface facing the mold assembly 32) of the circumferential edge portion projects toward the mold assembly 32 at the inner circumferential edge thereof, to thereby form a projection portion. The projection amount of the projection portion increases toward the inner circumferential edge.

As described above, in the present embodiment, the projection portion is formed at the inner circumferential edge portion of the front end surface of the sprue bush 24. Therefore, even when a cutting burr is formed on the information surface side of a disk substrate, a distal end of the cutting burr is prevented from projecting from the information surface.

In the present embodiment, the die 28 is formed by the main body portion and the circumferential edge portion of the sprue bush 24. However, as in the third embodiment (FIG. 8), the stationary-side bush 30 may be disposed radially outward of the sprue bush 24 so as to surround the same to thereby form the die 28. In this case, the stationary-side bush 30 constitutes the surrounding portion; the sprue bush 24 constitutes the first punching portion; and the cut punch 48 disposed on the movable-side mold assembly 32 constitutes the second punching portion.

A front end surface (a surface facing the mold assembly 32) of the stationary-side bush 30 projects toward the mold assembly 32 at the inner circumferential edge thereof, to thereby form a projection portion. The projection amount of the projection portion increases toward the inner circumferential edge.

In this case, the projection portion is formed at the inner circumferential edge portion of the front end surface of the stationary-side bush 30. Therefore, even when a cutting burr is formed on the information surface side of a disk substrate, a distal end of the cutting burr is prevented from projecting from the information surface.

Moreover, the present embodiment may be modified such that, in the stationary-side mold assembly 12, a projection portion is formed on the circumferential edge portion of the sprue bush 24 or a projection portion (95) is formed on the stationary-side bush 30, and such that a projection portion is formed on the movable-side bush 47 of the movable-side mold assembly 32 as in the first embodiment or a projection portion is formed on the floating punch 62 of the movable-side mold assembly 32 as in the second embodiment.

In such a case, even when a cutting burr is formed on the information surface side of a disk substrate, a distal end of the cutting burr is prevented from projecting from the information surface, and even when a burr is formed on the non information surface side of a disk substrate, a distal end of the burr is prevented from projecting from the non information surface.

In the above-described third embodiment, the projection portion 95 is formed only on the stationary-side bush 30, and, in the above-described fourth embodiment, the projection portion 96 is formed only on the circumferential edge portion 124b. However, formation of the projection portion 95 or 96 on the stationary-side mold assembly 12 only is not preferred, and a projection portion is preferably formed on the movable-side mold assembly 32 as well.

The present invention is not limited to the above-described embodiments. Numerous modifications and variations of the present invention are possible in light of the spirit of the present invention, and they are not excluded from the scope of the present invention.

**Claims**

1. A disk-molding mold comprising:

   (a) a first mirror-surface disk;
   (b) a second mirror-surface disk disposed such that the second mirror-surface disk advances toward the first mirror-surface disk and retreats away from the first mirror-surface disk;
   (c) a stamper attached to one of the first and second mirror-surface disks;
   (d) a first punching portion formed on the first mirror-surface disk;
   (e) a second punching portion formed on the second mirror-surface disk and disposed such that the second punching portion advances toward the first punching portion and retreats away from the first punching portion, the second punching portion punching a disk substrate prototype within a cavity when advanced;
   (f) a stationary-side surrounding member which surrounds the first punching portion; and
   (g) a movable-side surrounding member which surrounds the second punching portion, wherein
   (h) a projection portion is formed on at least one of the surrounding members along an inner circumferential edge thereof such that the projection portion projects toward the other surrounding member.

2. A disk-molding mold according to claim 1, wherein the stamper is attached to the second mirror-surface disk.

3. A disk-molding mold according to claim 2, wherein the projection portion is formed on the movable-side surrounding member.

4. A disk-molding mold according to claim 2 or 3, wherein the projection portion is formed on the stationary-side surrounding member.

5. A disk-molding mold according to claim 1, wherein the stamper is attached to the first mirror-surface disk.

6. A disk-molding mold according to claim 5, wherein the projection portion is formed on the stationary-side surrounding member.

7. A disk-molding mold according to claim 5 or 6, wherein the projection portion is formed on the movable-side surrounding member.

8. A disk-molding mold according to claim 1, wherein the movable-side surrounding member is disposed such that it does not move in relation to the second mirror-surface disk.

9. A disk-molding mold according to claim 1, wherein the movable-side surrounding member is disposed such that it advances and retreats in relation to the second mirror-surface disk.

10. A disk-molding mold according to claim 1, wherein the second punching portion is always placed forward of a front end surface of the movable-side surrounding member during a molding process.

11. A disk substrate molded by a disk-molding mold comprising a first mirror-surface disk; a second mirror-surface disk disposed such that the second mirror-surface disk advances toward the first mirror-surface disk and retreats away from the first mirror-surface disk; a stamper attached to one of the first and second mirror-surface disks; a first punching portion formed on the first mirror-surface disk; a second punching portion formed on the second mirror-surface disk and disposed such that the second punching portion advances toward the first punching portion and retreats away from the first punching portion, the second punching portion punching a disk substrate prototype within a cavity when advanced; a stationary-side surrounding member which surrounds the first punching portion; and a movable-side surrounding member which surrounds the second punching portion, wherein a projection portion is formed on at least one of the surrounding members along an inner circumferential edge thereof such that the projection portion projects toward the other surrounding member,
the disk substrate comprising a chamfered portion corresponding to the projection portion is formed on an information surface side of the disk substrate along an inner circumferential edge thereof.

12. A method of molding a disk substrate by use of a disk-molding mold comprising a first mirror-surface disk; a second mirror-surface disk disposed such that the second mirror-surface disk advances toward the first mirror-surface disk and retreats away from the first mirror-surface disk; a stamper attached to one of the first and second mirror-surface disks; a first punching portion formed on the first mirror-surface disk; a second punching portion formed on the second mirror-surface disk and disposed such that the second punching portion advances toward the first punching portion and retreats away from the first punching portion, the second punching portion punching a disk substrate prototype within a cavity when advanced; a stationary-side surrounding member which surrounds the first punching portion; and a movable-side surrounding member which surrounds the second punching portion, wherein a projection portion is formed on at least one of the surrounding members along an inner circumferential edge thereof such that the projection portion projects toward the other surrounding member, the method comprising a step of forming a chamfered portion corresponding to the projection portion on an information surface side of the disk substrate along an inner circumferential edge thereof.

# FIG. 1

# FIG. 2

# FIG. 3

# FIG. 4

# FIG. 5

# FIG. 6

# FIG. 7

# FIG. 8

# FIG. 9

12  26

24    30    16

95   s33

32

65

48

47

# FIG. 10

12  26

124    16

124a   28   124b

q12  96  q11  s43

# FIG. 11

<table>
<tr><td colspan="2" align="center">**INTERNATIONAL SEARCH REPORT**</td><td colspan="2">International application No.<br>PCT/JP2007/072844</td></tr>
</table>

A. CLASSIFICATION OF SUBJECT MATTER
*B29C45/38*(2006.01)i, *B29C45/17*(2006.01)i, *G11B7/24*(2006.01)i, *G11B7/26*
(2006.01)i, *B29L17/00*(2006.01)n

According to International Patent Classification (IPC) or to both national classification and IPC

B. FIELDS SEARCHED

Minimum documentation searched (classification system followed by classification symbols)
B29C45/00-45/84, G11B7/24, G11B7/26

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-231687 A   (Meiki Co., Ltd.),<br>07 September, 2006 (07.09.06),<br>Claims; Par. Nos. [0009] to [0011], [0013],<br>[0015]; Figs. 1 to 3<br>(Family: none) | 1,2,4,9,10<br>5,6,11,12<br>3,7,8 |
| Y<br>A | JP 2003-154558 A  (Kabushiki Kaisha Seiko<br>Giken),<br>27 May, 2003 (27.05.03),<br>Claims; Par. Nos. [0018], [0024]; Figs. 1 to 3<br>(Family: none) | 5,6,11,12<br>1-4,7-10 |
| Y<br>A | JP 10-323865 A  (Kabushiki Kaisha Seiko Giken),<br>08 December, 1998 (08.12.98),<br>Claims; Par. Nos. [0019] to [0023]; Figs.<br>1 to 4<br>(Family: none) | 5,6,11,12<br>1-4,7-10 |

☐ Further documents are listed in the continuation of Box C.          ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  20 February, 2008 (20.02.08) | Date of mailing of the international search report<br>  04 March, 2008 (04.03.08) |
|---|---|
| Name and mailing address of the ISA/<br>  Japanese Patent Office | Authorized officer |
| Facsimile No. | Telephone No. |

Form PCT/ISA/210 (second sheet) (April 2007)

## REFERENCES CITED IN THE DESCRIPTION

**Patent documents cited in the description**

- JP 2003154558 A